# NOUVEAU FASCICULE DE BREVET EUROPEEN

(11) **EP 0 718 250 B2**
(45) Date de publication et mention de la décision concernant l'opposition: **15.07.2015**
(45) Mention de la délivrance du brevet: 16.07.2003
(21) Numéro de dépôt: 95402926.0
(22) Date de dépôt: 22.12.1995
(51) Int. Cl.: C03C 17/36

(54) **Substrats en verre revêtus d'un empilement de couches minces, à propriété de réflexion dans l'infrarouge et/ou dans le domaine du rayonnement solaire**
Glasssubstrate beschichtet mit einem Dünnschichtaufbau mit reflektierenden Eigenschaften für Infrarot- und/oder Sonnenstrahlung
Glass substrates coated with a stack of thin layers having reflective properties for infrared and/or solar radiation

(30) Priorité: 23.12.1994 FR 9415566
(43) Date de publication de la demande: 26.06.1996
(60) Demande divisionnaire: 03077200.8
(73) Titulaire: SAINT-GOBAIN GLASS FRANCE, 92400 Courbevoie (FR)
(72) Inventeur: Macquart, Philippe, F-92600 Asnieres (FR); Rondeau, Véronique, F-93700 Drancy (FR); Guiselin, Olivier, F-75017 Paris (FR)
(74) Mandataire: Jamet, Vincent

(56) Documents cités:
- EP-A- 0 229 921
- EP-A- 0 303 109
- EP-A- 0 456 487
- EP-A- 0 506 507
- EP-A- 0 518 755
- EP-A- 0 567 735
- EP-A- 0 611 213
- EP-A- 0 622 645
- EP-A1- 0 230 188
- EP-A1- 0 233 003
- EP-A1- 0 279 550
- EP-A1- 0 546 302
- EP-A1- 0 611 213
- EP-A2- 0 314 413
- EP-A2- 0 536 607
- EP-B1- 0 279 550
- WO-A1-90/02653
- DE-A1- 3 941 027
- FR-A- 2 669 325
- FR-B1- 2 641 272
- JP-A- S63 100 043
- US-A- 5 288 527
- US-A- 5 376 455

## Description

L'invention concerne les substrats transparents, notamment en verre, revêtus d'un empilement de couches minces comprenant au moins une couche métallique pouvant agir sur le rayonnement solaire et/ou sur le rayonnement infrarouge de grande longueur d'onde.

L'invention concerne également l'utilisation de tels substrats pour fabriquer des vitrages d'isolation thermique et/ou de protection solaire, ci-après désignés sous le terme de vitrages « fonctionnels ». Ces vitrages peuvent équiper aussi bien les bâtiments que les véhicules, en vue notamment de diminuer l'effort de climatisation et/ou de réduire une surchauffe excessive entraînée par l'importance toujours croissante des surfaces vitrées dans les pièces et habitacles.

Un type d'empilement de couches minces connu pour conférer à des substrats transparents des propriétés thermiques, tout particulièrement de bas-émissivité, est constitué principalement par une couche métallique, notamment en argent, disposée entre deux revêtements de matériau diélectrique du type oxyde métallique. On le fabrique généralement par une succession de dépôts effectués par une technique utilisant le vide comme la pulvérisation cathodique, éventuellement assistée par champ magnétique. Peuvent aussi être prévues deux couches métalliques très fines de part et d'autre de la couche d'argent, la couche sous-jacente en tant que couche d'accrochage ou de nucléation, et la surcouche en tant que couche de protection ou « sacrificielle » afin d'éviter l'oxydation de l'argent, si la couche d'oxyde qui la surmonte est déposée par pulvérisation réactive en présence d'oxygène.

Si la couche d'argent détermine essentiellement les performances thermiques, anti-solaires et/ou de basse-émissivité du vitrage final, les couches de matériau diélectrique remplissent plusieurs rôles, puisqu'elles agissent tout d'abord sur l'aspect optique du vitrage obtenu de manière interférentielle. Elles protègent en outre la couche d'argent des agressions chimiques et/ou mécaniques, ainsi le brevet français FR-B-2 641 271 décrit un empilement où la couche d'argent est intercalée entre deux revêtements de matériau diélectrique, chacun de ces revêtements étant constitué d'une pluralité de couches d'oxydes métalliques. Le revêtement sous-jacent à la couche d'argent se compose de trois couches d'oxydes superposées dont une couche d'oxyde d'étain, celle adjacente à la couche d'argent étant en oxyde de zinc et ayant d'après ce document un effet de protection de l'argent, notamment en le rendant moins vulnérable à l'attaque par l'oxygène. Par contre, l'épaisseur de la couche d'oxyde de zinc est faible, car l'oxyde de zinc, peu résistant par ailleurs, risquerait, en trop forte quantité, de fragiliser l'ensemble de l'empilement. Les couches de matériau diélectriques qui encadrent la couche d'argent la protègent ainsi des agressions et peuvent même permettre d'optimiser sa qualité en améliorant son mouillage, comme cela est décrit dans la demande de brevet EP-A-0 611 213.

On demande actuellement de plus en plus que ces vitrages fonctionnels bas-émissifs ou anti-solaires présentent aussi des caractéristiques inhérentes aux substrats eux-mêmes, notamment esthétiques (qu'ils puissent être galbés), mécaniques (qu'ils soient plus résistants), ou de sécurité (qu'ils ne blessent pas en cas de bris). Cela nécessite de faire subir aux substrats verriers des traitements thermiques connus en eux-mêmes du type bombage, recuit, trempe. S'ils sont effectués sur les substrats déjà revêtus de l'empilement, sans précaution ou adaptation des couches minces, ils tendent à dégrader irréversiblement la couche d'argent, à détériorer complètement ses propriétés thermiques, et ceci pour de multiples raisons : sous l'effet de la chaleur, la couche d'argent s'oxyde par diffusion d'oxygène de l'atmosphère à travers les couches qui la surmontent. Elle peut tendre aussi à s'oxyder par diffusion de l'oxygène du verre à travers les couches sous-jacentes. En dernier lieu, elle peut tendre de surcroît à s'altérer au contact d'ions alcalins du type ions sodium Na⁺ migrant du verre à travers les couches sous-jacentes. Les diffusions d'oxygène ou d'ions alcalins peuvent être facilitées et amplifiées par la détérioration ou la modification structurelle des couches d'oxydes elles-mêmes sous l'effet de la chaleur.

Une première solution a consisté à augmenter de manière très significative les épaisseurs des deux couches fines métalliques, évoquées précédemment, de part et d'autre de la couche d'argent. Suffisamment épaisses, elles peuvent effectivement « faire écran » et protéger la couche d'argent. Si l'on parvient ainsi à conserver pratiquement inchangées les propriétés thermiques de l'empilement, notamment son émissivité, en revanche on en modifie les propriétés optiques : les deux couches métalliques s'oxydant largement « à la place » de la couche d'argent, elles entraînent notamment une forte augmentation de la transmission lumineuse T_{L}. On peut ainsi obtenir un vitrage bas-émissif trempé après dépôt de couches présentant une valeur de T_{L} supérieure à 80%, alors qu'elle était nettement inférieure à cette valeur avant la trempe. On pourra se reporter notamment à la demande de brevet EP-A-0 506 507 pour la description d'un tel empilement « trempable », avec une couche d'argent disposée entre une couche d'étain et une couche de nickel-chrome. Mais il est clair qu'avant d'avoir subi la trempe, le vitrage revêtu d'un tel empilement était jusque-là plutôt considéré comme un produit « semi-fini », inutilisable tel quel, vu. sa valeur de transmission lumineuse aux environs de 60% à 70% peu compatible avec les exigences actuelles du marché pour des vitrages bas-émissifs hautement transparents.

L'inconvénient qui en découle est qu'il est donc indispensable de développer et fabriquer, en parallèle, deux types d'empilements de couches bas-émissives et/ou anti-solaires , l'un pour vitrages non trempés, l'autre pour vitrages destinés à être trempés ou bombés, ce qui est compliqué aussi bien en termes d'efforts de recherche et développement que de gestion de stock en production, notamment.

Le but de l'invention est alors de pallier cet inconvénient, en cherchant à mettre au point un nouveau type d'empilement bas-émissif ou anti-solaire de couches minces qui soit performant en termes de propriétés optiques et thermiques, et qui conserve ces performances, que son substrat porteur soit ensuite soumis ou non à un traitement thermique du type trempe ou bombage.

L'invention propose donc un nouveau substrat transparent tel que défini dans la revendication 1.

L'invention a pour objet un substrat transparent, notamment en verre, muni d'un empilement de couches minces comportant au moins une couche à base d'argent à propriétés dans l'infrarouge, notamment bas-émissive et deux revêtements à base de matériaux diélectriques situés, l'un au-dessous et l'autre au-dessus de la couche à propriétés dans l'infrarouge, ainsi qu'une couche métallique de protection, placée immédiatement au-dessus et au contact de la couche à propriétés dans l'infrarouge, substrat dans lequel, en vue de prévenir la modification des propriétés de l'empilement, notamment optiques et thermiques, au cas où le substrat est soumis à un traitement thermique du type trempe ou bombage :
- d'une part le second revêtement, à base de matériau diélectrique, comporte une couche-barrière à la diffusion de l'oxygène choisie parmi l'un des matériaux suivants : composés du silicium SiO₂, SiOₓC_{y}, SiOₓN_{y}, nitrures comme Si₃N₄ ou AIN, carbures comme SiC, TiC, CrC, TaC d'une épaisseur d'au moins 10 nanomètres et de préférence d'au moins 20 nanomètres, et,
- d'autre part la couche à propriétés dans l'infrarouge est directement au contact avec le revêtement diélectrique sous-jacent.

Les avantages spécifiques de chacun des matériaux retenus pour la couche-barrière à la diffusion de l'oxygène seront détaillés par la suite. On peut cependant les classer dès à présent en deux catégories : les composés du silicium et les nitrures sont des matériaux largement transparents, et ne pénalisent donc pas l'empilement de couches en termes de transmission lumineuse. On a donc avantage à choisir la couche-barrière parmi eux quand on veut des vitrages à couche fonctionnelle du type bas-émissif hautement transparents. Par contre, les carbures sont des matériaux relativement absorbants, qui tendent donc à abaisser la transmission lumineuse, on y a donc recours pour faire les couches-barrières plutôt quand on veut des vitrages à couche fonctionnelle du type anti-solaire à transmission lumineuse diminuée.

La configuration d'empilements selon l'invention prévoit par ailleurs que la couche à propriétés dans l'infra-rouge ne soit séparée du revêtement à base de matériau diélectrique placé lui-même sur le verre par aucune couche métallique. En effet une telle couche quand elle est présente est absorbante avant tout traitement thermique. Un tel traitement, l'oxyde, au moins partiellement, et sa transmission augmente, entraînant une différence sensible dans les caractéristiques optiques de l'empilement avant et après le traitement thermique.

C'est un résultat technique très avantageux, mais aussi très inattendu. En effet, jusque-là, lorsqu'on cherchait à mettre au point un empilement de couches bas-émissives qui soit « trempable » ou « bombable », on considérait comme indispensable la présence de couches métalliques relativement « épaisses » en contact direct avec chacune des faces de la couche fonctionnelle, couches la protégeant en s'oxydant « à sa place ».

Or, il s'est avéré que la présence de la couche métallique de protection et de la couche-barrière à la diffusion de l'oxygène, selon l'invention, toutes deux au-dessus de la couche à propriétés dans l'infra-rouge, était suffisante pour garantir la « trempabilité » ou la « bombabilité » de l'empilement sans modification de ses propriétés, et que grâce à elles, la couche fonctionnelle ne se détériorait pas à haute température, bien qu'elle soit en contact direct avec des couches d'oxyde métallique sur au moins une de ses faces.

On aurait pu craindre, au contraire, qu'un contact direct avec un oxyde provoque l'oxydation de la couche fonctionnelle à haute température, par diffusion des oxygènes constitutifs de l'oxyde dans cette couche.

On peut ainsi concevoir des empilements « trempables » au sens de l'invention du type :
oxyde(s)/argent/M/(oxyde(s))/couche barrière,
la couche M étant une très fine couche de métal qui peut se révéler nécessaire, comme explicité ci-après, simplement en tant que couche de protection usuelle quand le dépôt de la couche suivante se fait par pulvérisation réactive et la couche d'oxyde(s) au-dessus de la couche M étant optionnelle.

A partir de ce schéma, toutes les variantes concernant le type et le nombre de couches sous la couche fonctionnelle ou entre la couche-barrière et la couche fonctionnelle, de préférence en argent, sont bien sûr possibles.

Venons-en maintenant au choix de la nature de la couche-barrière.

Le nitrure de silicium et le nitrure d'aluminium se sont avérés des composés particulièrement avantageux à divers titres : tout d'abord, au vu de l'objectif de l'invention, ils remplissent deux conditions très importantes : ils sont aptes à bloquer la diffusion de l'oxygène même à haute température. Prévus en quantité suffisante au-dessus de la couche fonctionnelle, ils servent de barrière lui assurant son intégrité, même si le substrat est bombé ou trempé après dépôt. Ensuite, ils sont eux-mêmes largement inertes face à une attaque oxydante, ce qui signifie qu'ils ne subissent aucune modification chimique (du type oxydation) ou structurelle notable lors de la trempe ou du bombage. Ils n'entraînent donc quasiment aucune modification optique de l'empilement en cas de trempe ou de bombage, notamment en terme de niveau de transmission lumineuse.

En outre, leur utilisation dans un empilement du type bas-émissif n'apporte aucune complication notable dans sa fabrication. Il n'est pas nécessaire de ré-ajuster de manière très notable les épaisseurs de chacune des couches « habituelles » d'un tel empilement, notamment parce qu'ils présentent un indice de réfraction proche de la plupart des oxydes métalliques utilisés jusque-là comme revêtements diélectriques, tels que l'oxyde de zinc, d'étain, de tantale ou de niobium. Ils peuvent se substituer à ce type d'oxyde métallique ou être associés à certains types d'oxydes comme spécifiés ci-après. (Le nitrure de silicium Si₃N₄ a en effet un indice de réfraction d'environ 2,1 et le nitrure d'aluminium un indice d'environ 2).

Le nitrure de silicium préféré est le plus dense et le plus pur possible. Si on préfère déposer l'ensemble des couches par une technique sous vide du type pulvérisation cathodique, on peut avantageusement choisir de déposer le nitrure de silicium par pulvérisation réactive à partir d'une cible de silicium en présence de N₂. Dans ce cas, pour rendre la cible plus conductrice, il peut s'avérer nécessaire de lui adjoindre un dopant tel que le bore. Les couches de nitrure de silicium selon l'invention peuvent ainsi contenir du bore, mais de préférence dans une proportion d'au plus 2% atomique par rapport au silicium. Dans le reste du présent texte, le terme « nitrure de silicium » se rapporte donc aussi bien à du Si₃N₄ pur qu'à du Si₃N₄ contenant des impuretés du type dopant. Le dépôt de la couche de Si₃N₄, peut aussi être effectué par une technique du type CVD plasma (CVD signifie « Chemical Vapor Deposition », une pyrolyse en phase gazeuse), comme décrit dans le brevet US-5 288 527.

Avantageusement, on règle également les conditions de dépôt de manière à ce que le nitrure de silicium présente une densité proche de la densité théorique, notamment au moins 80% de la densité théorique. Une forte densité garantit un « effet barrière » optimal vis-à-vis de l'oxygène, même si l'on utilise des couches de nitrure de silicium de relativement faible épaisseur. Il en est de même si l'on choisit plutôt du nitrure d'aluminium, obtenu de préférence également par une technique sous vide du type pulvérisation cathodique réactive à partir d'une cible en aluminium en présence de N₂.

Choisir de l'oxyde de silicium, plus particulièrement pour constituer la couche du premier revêtement diélectrique en contact avec le verre, est une variante tout-à-fait avantageuse. En effet, il s'agit d'un matériau qui, comme le nitrure de silicium, constitue une barrière efficace à la diffusion de l'oxygène et même des alcalins. Mais en outre, il présente un indice de réfraction d'environ 1,45 très proche de celui du substrat porteur de l'empilement, quand ce dernier est en verre. Si donc on dispose la couche d'oxyde de silicium directement sur le verre, ce qui constitue la configuration préférée, cette couche « n'intervient » quasiment pas, sur l'aspect optique que l'empilement des couches va, dans son ensemble, conférer à ce substrat. On peut donc lui conférer seulement l'épaisseur suffisante, 10 nanomètres ou plus, pour garantir son efficacité en tant que couche barrière, et la surmonter de couches en matériau diélectrique à base d'oxydes métalliques connus et d'épaisseurs connues, qui rempliront le rôle optique voulu, sous réserve que ces oxydes puissent supporter de hautes températures sans modification structurelle suffisamment notable pour détériorer l'aspect optique de l'empilement, point qui sera développé par la suite.

Quand on choisit une couche à base d'oxyde de silicium plutôt qu'à base de nitrure de silicium ou d'aluminium dans le premier revêtement à base de matériau diélectrique, on peut obtenir une telle couche également par pulvérisation cathodique à partir d'une cible de silicium dopé, mais cette fois en présence d'oxygène. Le dopant peut être, notamment du bore ou de l'aluminium. La couche à base d'oxyde peut ainsi comprendre une petite quantité de bore ou d'aluminium, notamment dans une proportion d'au plus 2% atomique par rapport au silicium. Comme précédemment pour le nitrure, le terme « à base d'oxyde de silicium » est donc à comprendre dans le cadre de l'invention comme de l'oxyde comprenant également des impuretés du type « dopants », bore ou aluminium.

On peut aussi la déposer par pulvérisation sous vide en radio fréquence. La couche de SiO₂ peut aussi être déposée par d'autres techniques que la pulvérisation cathodique, notamment par CVD plasma à partir d'un précurseur silicié approprié ou par pyrolyse en phase gazeuse sous pression ambiante. S'il s'agit de la première couche de l'empilement, on peut alors choisir de la déposer sur le ruban de verre float directement, en continu, notamment à l'aide de précurseurs du type tétraétylorthosilicate TEOS. Par la même technique, on peut déposer également sur la couche de SiO₂ d'autres couches comme par exemple TiO₂. De telles méthodes sont décrites par exemple dans le brevet EP-B-0 230 188.

Les couches-barrières à base de SiOₓC_{y} ou SiOₓN_{y} sont très efficaces et présentent l'avantage de pouvoir présenter des indices de réfraction modulables en fonction de leur taux de carbone ou d'azote. Les mêmes techniques de dépôt peuvent être employées que pour les couches en SiO₂ : pulvérisation cathodique réactive, dépôt par CVD plasma ou par pyrolyse à pression ambiante (notamment directement sur le ruban de verre float avant découpe, en continu, à l'aide de la combinaison de précurseurs du type SiH₄ et éthylène dans le cas d'une couche en SiOₓC_{y}, comme cela est décrit dans le brevet EP-0 518 755).

Les couches-barrières à base de carbure, comme évoqué précédemment ont la particularité d'être relativement absorbantes et sont donc à réserver pour la fabrication de vitrages où il n'est pas impératif d'avoir une haute transmission lumineuse. On peut les déposer par pulvérisation réactive, notamment en présence de C₂H₂ ou CH₄, ou non réactive à partir de cibles en carbure. On peut aussi choisir un dépôt par CVD plasma.

La couche métallique fonctionnelle est avantageusement en argent. Son épaisseur peut être choisie entre 7 et 13 nanomètres, notamment entre 9 et 12 nanomètres, quand on veut des vitrages à basse émissivité et haute transmission lumineuse (notamment au moins une T_{L} de 70 à 80%), particulièrement dans des pays plutôt froids. Quand on veut des vitrages à fonction anti-solaires, réfléchissants, destinés plutôt à équiper des bâtiments dans des pays chauds, la couche d'argent peut être choisie plus épaisse, par exemple jusqu'à 20 à 25 nm (ce qui a évidemment pour conséquence d'avoir des vitrages à transmissions lumineuses nettement plus faibles, notamment inférieures à 60%).

La couche de protection prévue sur la couche fonctionnelle est avantageusement choisie de nature métallique, parmi notamment le niobium Nb, le tantale Ta, le titane Ti, le chrome Cr ou le nickel Ni ou un alliage à partir d'au moins deux de ces métaux, comme un alliage de niobium et de tantale Nb/Ta, de niobium et de chrome Nb/Cr ou de tantale et de chrome Ta/Cr ou un alliage nickel-chrome. Elle conserve sa fonction habituelle de couche « sacrificielle » pour protéger la couche fonctionnelle en cas de dépôt de la couche suivante par pulvérisation réactive. Si cette pulvérisation se fait en présence d'O₂, en vue de déposer un oxyde, la couche superficielle est effectivement nécessaire, de préférence avec une épaisseur d'au plus 2 nm, de l'ordre de 0,5 à 1,5 nm. Dans l'empilement final, elle est partiellement, voire pour l'essentiel, oxydée. Si cette pulvérisation se fait en présence de N₂, en vue de déposer un nitrure, cette couche de protection n'est pas absolument nécessaire. Elle est cependant préférable : il s'est en effet avéré que la couche fonctionnelle, notamment d'argent, sous-jacente pouvait également risquer de se détériorer au contact d'azote réactif. Compte tenu cependant que la réactivité de l'azote est plus faible que celle de l'oxygène, elle peut être extrêmement fine, notamment d'épaisseur inférieure ou égale à 1 nm. Dans l'empilement final, elle peut être partiellement, voire pour l'essentiel, nitrurée.

On peut aussi attribuer à cette couche de protection une fonction supplémentaire : le « réglage » de la valeur de transmission lumineuse, quand on veut fabriquer des vitrages anti-solaires à transmission lumineuse réduite précédemment. En effet, moduler l'épaisseur de cette couche de protection jusqu'à des épaisseurs par exemple de 8 à 10 nanomètres permet d'ajuster très précisément la transmission lumineuse, par exemple entre 50 et 60%.

Le second revêtement en matériau diélectrique de l'empilement, au-dessus de la couche fonctionnelle, a de préférence une épaisseur géométrique totale comprise entre 30 et 60 nanomètres, notamment entre 35 et 45 nanomètres.

Une première variante consiste à ce qu'il ne soit constitué que de la couche-barrière, notamment choisie à base de nitrure de silicium ou d'aluminium, ce qui est le plus simple en termes d'installation de dépôt mais pas forcément l'optimum en termes de vitesse de dépôt de l'empilement.

Une seconde variante consiste à le constituer de la couche-barrière en tant que dernière couche de l'empilement, notamment en nitrure de silicium ou d'aluminium, couche-barrière que l'on associe à au moins une autre couche de matériau diélectrique non susceptible de modification structurelle importante, notamment d'ordre cristallographique, à haute température, du type oxyde métallique, notamment en oxyde de zinc ZnO. Dans cette configuration, le nitrure de silicium en couche « extérieure », joue pleinement son rôle de barrière. La ou les couche(s) d'oxyde sous-jacente(s), a (ont) alors un effet bénéfique sur la transmission lumineuse, quand on cherche à obtenir une transmission très élevée.

Les oxydes métalliques du type ZnO sont stables et inertes à haute température, et ne détériorent pas la couche fonctionnelle, ce qui tend à prouver qu'effectivement leurs atomes d'oxygène ne diffusent pas jusqu'à la couche fonctionnelle, lors d'un bombage, d'une trempe ou d'un recuit.

Le revêtement sous-jacent dit « de mouillage » est dans le contexte de l'invention, une couche qui se trouve au contact direct de la couche fonctionnelle et qui est destiné à faciliter son mouillage, augmenter son accrochage avec les couches inférieures et/ou augmenter sa durabilité, ou ses propriétés optiques et thermiques.

Il est à base d'oxyde métallique non susceptible de modification structurelle, notamment sur le plan cristallographique, à haute température risquant de pénaliser l'empilement. Selon l'invention il s'agit d'une couche à base d'oxyde de zinc ZnO.

Comme évoqué précédemment, l'oxyde de zinc ne se modifie pas sensiblement sur le plan structurel sous l'effet de la chaleur surtout s'il est protégé du contact de l'oxygène et des alcalins, et en outre il possède des propriétés de mouillage très intéressantes vis-à-vis des couches fonctionnelles bas-émissives du type argent. En oxyde, cette couche ne tend pas à pénaliser l'empilement en termes de transmission lumineuse, on peut donc lui conférer une épaisseur plus importante que dans le cas précédent, notamment une épaisseur comprise entre 5 et 40 nanomètres, notamment entre 15 et 30 nanomètres. Avec de telles épaisseurs, elle peut contribuer, outre sa fonction de mouillage, à ajuster l'aspect optique de l'empilement en association avec le premier revêtement en matériau diélectrique.

Terminons la description générale de l'empilement du premier revêtement à base de matériau diélectrique, en décrivant le composant situé sur le substrat, en-dessous de la couche d'oxyde métallique non susceptible de modifications structurelles.

Une première variante consiste à le constituer d'une couche-barrière d'indice de réfraction d'environ 2, notamment en AIN ou Si₃N₄.

Une seconde variante consiste à préférer une couche d'un matériau d'indice de réfraction inférieur à 2, comme SiO₂, SiOₓC_{y}, SiOₓN_{y}. Un mode de réalisation avantageux est une couche de SiO₂ car d'indice très similaire au substrat de verre lui-même.

Une troisième variante consiste à utiliser une autre couche du type oxyde métallique stable, c'est-à-dire ne se modifiant pas structurellement à haute température.

On ajuste l'épaisseur du premier revêtement situé sous la couche métallique fonctionnelle, quelle que soit la variante choisie, afin que l'épaisseur optique totale des couches de diélectrique sous la couche fonctionnelle donne à l'empilement des caractéristiques optiques, notamment colorimétriques, satisfaisantes. L'épaisseur géométrique totale du revêtement peut ainsi être choisie notamment entre 15 et 50 nanomètres. Si la couche-barrière de ce premier revêtement est en SiO₂, cette épaisseur peut être nettement plus importante, le SiO₂ ayant un indice proche de celui du verre.

A titre d'illustration, des empilements de couches répondant aux critères de l'invention peuvent ainsi être du type :
verre/ Si₃N₄ ou AlN/ ZnO/Ag/Nb/ Si₃N₄
ou verre/ Si₃N₄/ ZnO/Ag/Nb/ZnO / Si₃N₄
ou verre/SiO₂ ou SiOₓC_{y}/ZnO/Ag/Nb/ZnO/Si₃N₄ ou AIN

Il va de soi que l'invention s'applique également avantageusement à des empilements comprenant non pas une seule couche métallique fonctionnelle du type argent, mais plusieurs. Il faut alors prévoir le nombre et l'épaisseur de couches-barrières suffisants pour préserver l'ensemble de ces couches de l'oxydation en cas de traitement thermique, et notamment au moins une couche de nitrure de silicium ou d'aluminium sur la dernière couche fonctionnelle. Et pour obtenir une faible variation des propriétés optiques et spécialement de la transmission lumineuse, il est essentiel de ne pas avoir de couche métallique sous les couches métalliques fonctionnelles.

Au moins dans le cas des empilements comprenant une seule couche métallique fonctionnelle, on obtient de bonnes performances optiques et thermiques. L'invention permet ainsi l'obtention de vitrages bas-émissifs hautement transparents, avec notamment des substrats porteurs de l'empilement qui, une fois montés en double-vitrage, présentant à la fois une forte T_{L} d'au moins 74 à 80%, et une faible émissivité d'au plus 0,06 et même d'environ 0,05. Mais ce qui est très important, c'est que ces propriétés sont maintenues quasiment intactes (voire même améliorées) si l'on soumet les substrats porteurs des empilements, après dépôt, à des traitements thermiques du type bombage, recuit ou trempe qui peuvent les échauffer jusqu'à environ 620°C et plus : les variations de transmission lumineuse du vitrage dues à de tels traitements sont d'au plus 2% et les variations d'émissivité sont d'au plus 0,01, avec en outre, très peu de modifications colorimétriques, notamment en réflexion.

Il en découle toute une série d'avantages : une seule configuration d'empilement de couches (bas-émissif ou anti-solaire) pour chaque type de vitrage suffit pour fabriquer des vitrages aussi bien trempés que non trempés, ce qui facilite la gestion des stocks et permet beaucoup plus aisément de répondre très rapidement à la demande de vitrages fonctionnels, soit trempés, soit non trempés, selon la demande.

On peut aussi assembler indifféremment, sur une façade de bâtiment par exemple, des vitrages trempés et non trempés : l'oeil ne pourra pas détecter de disparités de l'aspect optique global de la façade. Il devient également possible de vendre les vitrages revêtus non trempés, en laissant à la discrétion de l'acheteur le soin de les tremper ou non, en pouvant lui garantir une constance dans leurs propriétés optiques et thermiques.

Les vitrages, qu'ils soient bombés, recuits ou trempés ou non, peuvent donc, grâce à l'invention, présenter des performances tout-à-fait équivalentes.

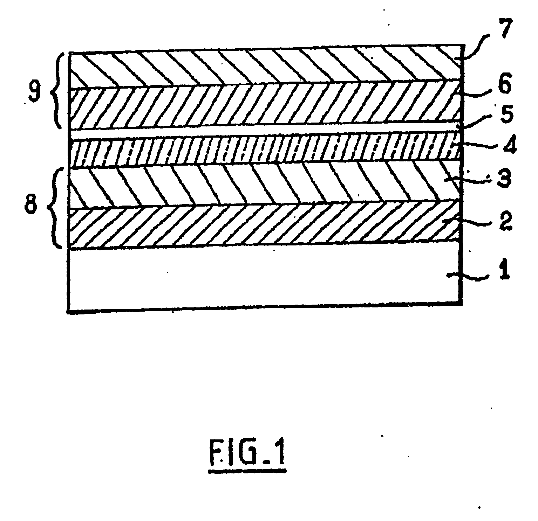

Les détails et caractéristiques avantageuses de l'invention vont maintenant ressortir des exemples suivants non limitatifs, à l'aide de la figure 1.

On précise que, dans tous les exemples, les dépôts successifs de couches minces se font par une technique de pulvérisation cathodique assistée par champ magnétique, mais pourraient aussi être réalisés par toute autre technique permettant une bonne maîtrise des épaisseurs de couche obtenues.

Les substrats sur lesquels sont déposés les empilements de couches minces sont des substrats de verre silico-sodo-calcique clair du type Planilux, commercialisés par SAINT-GOBAIN VITRAGE.

A la figure 1, le substrat en verre 1 est surmonté d'un empilement selon l'invention: successivement un revêtement 8 composé d'une couche-barrière 2 à la diffusion de l'oxygène et des ions Na⁺, et d'une couche 3 de mouillage, puis une couche 4 bas-émissive en argent, une couche 5 de protection encore appelée « sacrificielle » puis enfin de nouveau un deuxième revêtement à base de matériau diélectrique 9 comportant notamment une couche-barrière à l'oxygène 7. Cette figure est très schématique, et, pour plus de clarté, ne respecte pas les proportions quant aux épaisseurs des divers matériaux représentés.

Les exemples 1 à 3 sont réalisés conformément selon l'invention. L'exemple 5 est un exemple comparatif explicité par la suite.

### EXEMPLE 1:

Cet exemple préconise l'utilisation de deux couches-barrières 2, 7 toutes les deux à base de Si₃N₄ pour « encadrer » et « protéger » la couche 4 d'argent en cas de traitement thermique.

C'est un empilement du type :
verre/Si₃N₄/ZnO/Ag/Nb/Si₃N₄
qui utilise une couche de mouillage 3 en oxyde.

L'installation de dépôt comprend au moins une chambre de pulvérisation munie de cathodes équipées de cibles en matériaux appropriés sous lesquelles le substrat 1 passe successivement. Les conditions de dépôt pour chacune des couches préconisées pour cet exemple sont :
- la couche 4 en argent est déposée à l'aide d'une cible en argent sous une pression de 8.10⁻³ mbar (0,8 Pa) dans une atmosphère d'argon,
- les couches 2 et 7 à base de nitrure de silicium sont déposées à l'aide d'une cible en silicium dopé à 1% de bore par pulvérisation réactive dans une atmosphère d'azote, sous une pression de 1,5.10⁻³ mbar 0,15 Pa),
- la couche 3 de mouillage, qui est en ZnO, est déposée à l'aide d'une cible en zinc par pulvérisation réactive dans une atmosphère argon/oxygène dont environ 40% volumique d'oxygène, sous une pression de 8.10⁻³ mbar 0,8 Pa),
- la couche 5 de protection en Nb est déposée à l'aide d'une cible en Nb par pulvérisation en atmosphère inerte d'argon sous une pression de 8.10⁻³ mbar (0,8 Pa).

Les densités de puissance et les vitesses de défilement du substrat sont ajustées de manière connue pour obtenir les épaisseurs de couches voulues.

Le tableau 1 ci-dessous indique la nature des couches et leurs épaisseurs en nanomètres, de l'empilement de l'exemple 1, utilisant des substrats de 3 millimètres d'épaisseur.

**TABLEAU 1**

| | **EXEMPLE 1** |
|---|---|
| Si₃N₄ (2) | 20 |
| ZnO (3) | 20 |
| Ag(4) | 10 |
| Nb(5) | 1 |
| Si₃N₄ (7) | 40 |

Le substrat de l'exemple 1, une fois revêtu de son empilement de couches, est ensuite soumis à un traitement thermique consistant en un chauffage à environ 620°C suivi d'un refroidissement.

Le tableau 2 ci-dessous indique avant puis après le traitement thermique, la valeur de transmission lumineuse T_{L} en pourcentage, la valeur de réflexion lumineuse R_{L} également en pourcentage, les valeurs de a*(R) et b*(R) en réflexion dans le système de colorimétrie (L, a*, b*), sans unité. Toutes les mesures sont faites en référence à l'illuminant D₆₅. Sont également indiquées la valeur d'émissivité ∈, sans unité.

**TABLEAU 2**

| | **EXEMPLE 1** | |
|---|---|---|
| | **(substrat monolithique)** | |
| | Avant traitement thermique | Après traitement thermique |
| T_{L} | 85,2 | 83,8 |
| R_{L} | 4,3 | 4,1 |
| a*(R) | 4,3 | 6,8 |
| b*(R) | -10,6 | -10,9 |
| ∈ | 0,05 | 0,06 |

Un deuxième exemple 1 bis a été fait avec exactement les mêmes empilements que l'exemple 1 précédent. La seule différence réside dans le fait qu'il a été déposé cette fois sur un substrat 1 de même nature mais épais de 4 mm, substrat ensuite monté en double-vitrage avec un autre substrat de verre clair de 4 mm avec une lame d'argon intercalaire de 16 mm.

Le tableau 3 suivant reprend les caractéristiques T_{L}, R_{L}, a*(R), b*(R) et ∈ des doubles-vitrages, d'une part quand le substrat 1 revêtu n'a pas subi de chauffage, (colonne « sans traitement thermique »), d'autre part quand le substrat revêtu a, avant montage, subi ledit traitement thermique (chauffage à 620°C puis refroidissement) :

**TABLEAU 3**

| | **EXEMPLE 1bis** | |
|---|---|---|
| | **(double-vitrage)** | |
| | Sans traitement thermique | Après traitement thermique |
| T_{L} | 77 | 76 |
| R_{L} | 12 | 11 |
| a*(R) | 1,2 | 2,3 |
| b*(R) | -4,9 | - 4,8 |
| ∈ | 0,053 | 0,062 |

### EXEMPLE 2 :

Cet exemple 2 utilise l'empilement suivant :
verre/Si₃N₄/ZnO/Ag/Nb/ZnO/Si₃N₄

Il ne se différencie donc de l'exemple 1 qu'en ce qu'il ajoute une couche de ZnO « intercalaire » 6 entre la couche de protection 5 en Nb et la couche-barrière 7 en Si₃N₄. Cette couche de ZnO est déposée de manière identique à la couche de ZnO 3 dite de mouillage sous la couche d'argent 4 (se référer aux conditions de dépôt décrites précédemment). Le substrat 1 en verre clair a 4 mm d'épaisseur. Les épaisseurs en nanomètres, de chacune des couches sont spécifiées dans le tableau 4 ci-dessous.

**TABLEAU 4**

| | **EXEMPLE 2** |
|---|---|
| Si₃N₄ (2) | 20 |
| ZnO (3) | 10 |
| Ag(4) | 10 |
| Nb(5) | 1,5 |
| ZnO (6) | 5 |
| Si₃N₄ (7) | 35 |

Deux substrats absolument identiques revêtus d'un tel empilement sont montés chacun en double-vitrage avec chacun un substrat de verre clair de 4 mm par une lame d'argon intercalaire de 16 mm d'épaisseur, l'un ayant préalablement subi un chauffage à 620°C puis un refroidissement et pas l'autre.

Le tableau 5 ci-dessous donne les valeurs de T_{L}, a*(R), b*(R) et ∈ des deux double-vitrages.

**TABLEAU 5**

| | **EXEMPLE 2** | |
|---|---|---|
| | **(double-vitrage)** | |
| | Sans traitement thermique | Après traitement thermique |
| T_{L} | 79 | 80 |
| a*(R) | 1,46 | 3,39 |
| b*(R) | - 3,94 | -2,2 |
| ∈ | 0,05 | 0,046 |

### EXEMPLE 3 :

Cet exemple utilise cette fois une première couche-barrière 2 en SiO₂, avec l'empilement suivant :
verre/SiO₂/ZnO/Ag/Nb/ZnO/Si₃N₄

La couche de SiO₂ est déposée à partir d'une cible de silicium dopé à l'aluminium par pulvérisation réactive dopée à l'aluminium en présence d'un mélange argon/O₂.

Les autres couches sont déposées comme précédemment. Les épaisseurs en nanomètres des couches de l'empilement sont précisées dans le tableau 6 ci-dessous :

**TABLEAU 6**

| | **EXEMPLE 3** |
|---|---|
| SiO₂ (2) | 40 |
| ZnO (3) | 40 |
| Ag (4) | 10 |
| Nb (5) | 1,5 |
| ZnO (6) | 5 |
| Si₃N₄ (7) | 35 |

On fait ensuite les mêmes opérations de montage en double-vitrage avec et sans traitement thermique du substrat revêtu. Le chauffage est simplement poussé ici jusqu'à 630°C.

Le tableau 7 ci-dessous donne les valeurs de T_{L}, a*(R), b*(R) et ∈ dans les deux cas:

**TABLEAU 7**

| | **EXEMPLE 3** | |
|---|---|---|
| | **(double-vitrage)** | |
| | Sans traitement thermique | Après traitement thermique |
| T_{L} | 76 | 77 |
| a*(R) | - 0,82 | 0,24 |
| b*(R) | - 2,49 | - 2,12 |
| ∈ | 0,059 | 0,045 |

### EXEMPLE 4 :

Cet exemple 4 utilise l'empilement suivant :
verre/SnO₂/ZnO/Ag/Nb/Si₃N₄

En dehors de la couche-barrière superficielle en Si₃N₄, cet empilement se présente comme un empilement traditionnel, il utilise des matériaux très utilisés dans les couches bas-émissives réalisées en pulvérisation cathodique, en particulier SnO₂ qui est le plus habituel des matériaux diélectriques.

De manière inattendue, à la différence de l'art antérieur où pour obtenir une bonne tenue contre la corrosion et spécialement lors d'un traitement thermique, il fallait ou bien avoir deux couches-barrières du type Si₃N₄ (voir par exemple la demande de brevet européen EP-A-0 567 735) ou bien au moins deux couches de métal « sacrificiel » de part et d'autre de la couche fonctionnelle (voir par exemple le document EP-A--0 229 921), ici ni l'un ni l'autre ne sont utiles pour garantir la stabilité de l'empilement à la température.

Le tableau 8 montre en effet les résultats :

**TABLEAU 8**

| | **EXEMPLE 4** | |
|---|---|---|
| | **(double-vitrage)** | |
| | Sans traitement thermique | Après traitement thermique |
| T_{L} | 74 | 74 |
| a*(R) | + 0,5 | + 0,8 |
| b*(R) | -5,9 | - 5,6 |
| ∈ | 0,06 | 0,05 |

Ces résultats obtenus avec un produit très facile à réaliser (épaisseurs des couches en nm :
- SnO2 (2): 10
- ZnO (3): 30
- Ag (4): 10
- Nb (5): 1,5
- Si₃N₄ (7): 40),
sont très surprenants surtout lorsqu'on les compare à ceux de l'empilement-témoin de l'exemple 5.

### EXEMPLE COMPARATIF 5 :

Cet exemple comparatif utilise un empilement à couche d'argent du type de ceux commercialisés par la Société SAINT-GOBAIN VITRAGE sous la dénomination PLANITHERM. Il emploie, comme l'exemple 4 pour sa sous-couche, des couches en oxyde d'étain comme revêtement diélectrique, avec, de chaque côté de la couche d'argent une couche d'une épaisseur significative en alliage nickel-chrome. Le substrat 1 à 4 mm d'épaisseur. La couche d'argent est déposée comme précédemment. De manière connue, l'oxyde d'étain SnO₂ est déposé par pulvérisation réactive à partir d'une cible d'étain dans une atmosphère N₂/O₂. Les couches en NiCr sont déposées par pulvérisation en atmosphère inerte à partir de cible d'alliage Ni/Cr.

L'empilement est résumé dans le tableau 9 ci-dessous, les épaisseurs étant indiquées toujours en nanomètres.

**TABLEAU 9**

| **VERRE** | **EXEMPLE COMPARATIF 5** |
|---|---|
| SnO₂ | 35 |
| NiCr | 3 |
| Ag | 9-10 |
| NiCr | 6 |
| SnO₂ | 35 |

Le tableau 10 ci-dessous indique les mêmes données que le tableau 9 précédent, pour le substrat revêtu de cet empilement monté de la même manière en double-vitrage après avoir subi un traitement thermique à 630°C puis un refroidissement, ou sans traitement thermique :

**TABLEAU 10**

| | **EXEMPLE COMPARATIF 5** | |
|---|---|---|
| | **(double-vitrage)** | |
| | Sans traitement thermique | Après traitement thermique |
| T_{L} | 61 | 73 |
| R_{L} | 11 | 11 |
| a*(R) | 4,1 | - 0,26 |
| b*(R) | - 1,6 | - 1,73 |
| ∈ | 0,08 | 0,08 |

Différentes remarques peuvent être faites au vu de ces résultats.

Des tableaux 2, 3, 5, 7 on voit que les empilements selon l'invention parviennent à supporter des échauffements de l'ordre de 620, 630 ou 640°C sans modification notable de la transmission lumineuse T_{L} (à peine 2% de variation), ni de l'émissivité (au plus 0,01 de variation). Le traitement thermique n'affecte pas non plus de manière significative l'aspect colorimétrique en réflexion « côté couches » des substrats. On peut souligner à ce propos que 640°C est une température particulièrement élevée, les trempes de vitrages s'effectuant usuellement aux environs de 615- 620°C. On se garantit ainsi une « marge de sécurité », ce qui est important sur le plan industriel en cas de légers dérèglements dans le chauffage fourni par les fours de trempe standards pour vitrages.

Des exemples 1 à 3 selon l'invention, on voit que l'on peut moduler le niveau de performances, notament d'émissivité, que l'on recherche, que le vitrage soit trempé ou non, le choix de la constitution du premier revêtement en matériau diélectrique et de la couche de mouillage se révélant important pour optimiser lesdites performances.

Ainsi, le substrat selon l'exemple 1 utilisant une couche de mouillage à base d'oxyde parvient à avoir une émissivité de 0,053 une fois monté en double-vitrage, avant trempe (tableau 3).

L'exemple 2 ayant recours à deux couches de ZnO présente de très bonnes performances d'émissivité, mais aussi une valeur de TL qui atteint la barre des 80% en double-vitrage après traitement thermique, ce qui est excellent (cf. tableau 5).

Les exemples de l'invention ont ceci de commun que leurs émissivités évoluent très légèrement en cas de traitement thermique, mais « dans le bon sens », c'est-à-dire dans le sens d'une diminution , cela prouve que les couches d'argent n'ont pas subi de détérioration de leur qualité, au contraire, ce qui est à la fois très avantageux et surprenant.

Comme évoqué précédemment, la colorimétrie des exemples selon l'invention est très satisfaisante, qu'il y ait ou non traitement thermique, avec une couleur en réflexion très neutre, prouvée par des valeurs de a* et b* très faibles, tout particulièrement en ce qui concerne l'exemple 3 (cf. tableau 7).

Une caractéristique assez surprenante également qu'ont en commun les exemples 2 et 3 de l'invention est que leur transmissions lumineuses varient très légèrement en cas de traitement thermique, mais là encore « dans le bon sens », c'est-à-dire dans le sens d'une augmentation, alors même qu'ils utilisent tous deux des couches de mouillage en oxyde.

Enfin, l'exemple comparatif 5 montre les limites d'une solution consistant à rendre « trempable » un empilement bas-émissif en protégeant la couche d'argent par des couches métalliques susceptibles d'oxydation : si les performances thermiques peuvent ainsi être conservées, il n'en est pas de même en ce qui concerne l'aspect optique : plus de 10 points d'écart entre la T_{L} sans et avec traitement thermique (cf. tableau 10), ce qui est dû vraisemblablement à l'oxydation des couches de Ni/Cr de part et d'autre de la couche d'argent, ainsi qu'une variation importante de la valeur de a*_{(R)}.

On a par ailleurs constaté qu'il était important, si l'on choisit de déposer des couches « intercalaires » d'oxydes entre les couches-barrières 2, 7 et la couche d'argent 4, que ceux-ci soient choisis de telle sorte qu'un traitement thermique ne puisse pas affecter leur structure, et tout particulièrement leur état cristallographique. Ainsi, les exemples 1 à 3 de l'invention ont recours à du ZnO sous et éventuellement au-dessus de la couche d'argent, et les inventeurs ont vérifié qu'il était, tel que déposé, au moins partiellement cristallisé et qu'il conservait pour l'essentiel cet état de cristallisation une fois chauffé à 620 ou 640°C.

Il serait tout aussi judicieux de sélectionner des oxydes déposés à l'état amorphe et présentant la particularité de le rester s'ils sont ensuite chauffés. Les inventeurs ont, par contre, fait un essai similaire à l'exemple 1, en remplaçant la couche 3 de ZnO par une couche 3' de SnO₂ déposée comme à l'exemple comparatif 5. Ils ont constaté que les propriétés de la couche d'argent au-dessus de cette couche de SnO₂ étaient significativement détériorées après traitement thermique, curieusement, ce qui serait dû en fait à une modification structurelle notable, sur le plan cristallographique, de ce SnO₂ sous une forte chaleur. Les résultats de l'exemple 4 où le même SnO₂ ne se trouve séparé de l'argent que par une couche de ZnO sont d'autant plus surprenants.

## Revendications

1. Substrat transparent (1) en verre, muni d'un empilement de couches minces comportant au moins une couche métallique (4) à base d'argent à propriétés dans l'infrarouge, notamment bas-émissive et deux revêtements à base de matériau diélectrique situés, l'un au-dessous (8) et l'autre au-dessus (9) de la couche à propriétés dans l'infrarouge, ainsi qu'une couche métallique de protection (5), placée immédiatement au-dessus et au contact de la couche à propriétés dans l'infrarouge et optionnelle sauf en cas de dépôt de la couche suivante par pulvérisation réactive en présence d'oxygène en vue de déposer un oxyde, **caractérisé en ce que,** en vue de prévenir la modification des propriétés de l'empilement, notamment optiques et thermiques, au cas où le substrat est soumis à un traitement thermique de trempe ou bombage,
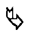 d'une part le second revêtement (9), à base de matériau diélectrique, comporte une couche-barrière (7) à la diffusion de l'oxygène choisie parmi l'un des matériaux suivants : SiO₂, SiOₓC_{y}, SiOₓN_{y}, Si₃N₄, AIN, carbures comme SiC, TiC, CrC, TaC, d'une épaisseur d'au moins 10 nanomètres,
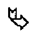 et d'autre part le premier revêtement à base de matériau diélectrique (8) comporte au moins une couche-barrière (2) à la diffusion des ions alcalins et oxygène choisi parmi l'un des matériaux suivants : SiO₂, SiOₓN_{y}, SiOₓC_{y}, Si₃N₄, AIN, carbures tels que CrC, SiC, TiC, TaC,
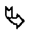 et le premier revêtement à base de matériau diélectrique (8) comporte également juste en dessous de la couche métallique (4) à propriétés dans l'infrarouge une couche de mouillage (3) à base d'oxyde de zinc ZnO en contact direct avec cette dernière.

2. Substrat selon la revendication 1, **caractérisé en ce que** la couche-barrière à la diffusion de l'oxygène (7) du second revêtement à base de matériau diélectrique (9) a une épaisseur d'au moins 20 nm.

3. Substrat (1) selon la revendication 1 ou 2, **caractérisé en ce que** la couche-barrière à la diffusion de l'oxygène (7) est à base de SiO₂, SiOₓC_{y}, SiOₓN_{y} Si₃N₄, AlN lorsque l'empilement de couches est destiné à fournir audit substrat des propriétés de haute transmission lumineuse et de basse émissivité.

4. Substrat (1) selon la revendication 1 ou 2, **caractérisé en ce que** la couche-barrière à la diffusion de l'oxygène (7) est à base de carbure lorsque l'empilement de couches est destiné à fournir audit substrat des propriétés anti-solaires à transmission lumineuse réduite.

5. Substrat selon l'une des revendications précédentes, **caractérisé en ce que** la couche-barrière (2) du premier revêtement à base de matériau diélectrique (8) a une épaisseur d'au moins 10 ou 15 nm, de préférence d'au moins 20 nm.

6. Substrat selon l'une des revendications précédentes, **caractérisé en ce que** la couche (4) à propriétés dans l'infrarouge a une épaisseur comprise entre 7 et 13 nanomètres, notamment entre 9 et 12 nanomètres, pour lui conférer des propriétés de basse émissivité, ou jusqu'à 20 à 25 nanomètres, pour lui conférer plutôt des propriétés antisolaires.

7. Substrat selon l'une des revendications précédentes, **caractérisé en ce que** l'empilement de couches minces comprend plusieurs couches métalliques à propriétés dans l'infrarouge.

8. Substrat selon la revendication 7, **caractérisé en ce qu'**au moins une couche-barrière du type Si₃N₄ ou AIN est placée au-dessus de la dernière des couches à propriétés dans l'infrarouge.

9. Substrat selon l'une des revendications précédentes, **caractérisé en ce que** la couche supérieure de protection (5) est à base d'un métal choisi parmi le niobium Nb, le tantale Ta, le titane Ti, le chrome Cr ou le nickel Ni ou d'un alliage à partir d'au moins deux de ces métaux, notamment d'un alliage de niobium et de tantale (Nb/Ta), de niobium et de chrome (Nb/Cr) ou de tantale et de chrome (Ta/Cr) ou de nickel et de chrome (Ni/Cr).

10. Substrat selon la revendication 9, **caractérisé en ce que** l'épaisseur de la couche supérieure de protection (5) est d'au plus 2 nanomètres, notamment comprise entre 0,5 et 1,5 nanomètres, ou d'une épaisseur jusqu'à 8 à 10 nanomètres.

11. Substrat selon l'une des revendications précédentes, **caractérisé en ce que** le second revêtement (9) à base de matériau diélectrique a une épaisseur géométrique totale comprise entre 30 et 60 nanomètres, notamment entre 35 et 45 nanomètres.

12. Substrat selon la revendication 1, **caractérisé en ce que** la couche sous-jacente de mouillage à base de ZnO (3) a une épaisseur géométrique comprise entre 5 et 40 nanomètres, notamment entre 15 et 30 nanomètres.

13. Substrat selon l'une des revendications précédentes, **caractérisé en ce que** le revêtement à base de matériau diélectrique (9), situé au-dessus de la couche à propriétés dans l'infrarouge (4), comporte la couche-barrière (7), notamment à base de nitrure de silicium ou de nitrure d'aluminium, associée à au moins une autre couche de matériau diélectrique (6) non susceptible de modification structurelle à haute température du type oxyde métallique, notamment en oxyde de zinc.

14. Substrat selon la revendication 13, **caractérisé en ce que** ladite autre couche (6) non-susceptible de modification structurelle à haute température est à base d'oxyde de zinc au moins partiellement cristallisé.

15. Substrat selon la revendication 1, **caractérisé en ce que** l'empilement est le suivant :
verre (1)/Si₃N₄ ou AlN (2) / ZnO (3) / Ag (4) / Nb (5) / Si₃N₄ (7)

16. Substrat selon l'une des revendications 1 à 14, **caractérisé en ce que** les deux couches barrières (2, 7) à la diffusion de l'oxygène sont à base de Si₃N₄.

17. Substrat selon l'une des revendications précédentes, **caractérisé en ce qu**'il présente une émissivité ε d'au plus 0,07 notamment d'au plus 0,06, et, une fois monté en double-vitrage, une transmission lumineuse T_{L} d'au moins 75 à 80 %.

18. Substrat selon l'une des revendications précédentes, **caractérisé en ce qu**'il présente une variation de transmission lumineuse ΔT_{L} d'au plus 2 % et une variation d'émissivité Δε d'au plus 0,01 après un traitement thermique de bombage ou trempe, notamment jusqu'à 640°C.

19. Vitrage multiple bas-émissif ou antisolaire, notamment double-vitrage, **caractérisé en ce qu'**il incorpore au moins un substrat selon l'une des revendications précédentes.

20. Vitrage feuilleté, **caractérisé en ce qu**'il incorpore au moins un substrat selon l'une des revendications 1 à 18 et en ce qu'il est soit antisolaire, soit chauffant en prévoyant les amenées de courant pour la (les) couche(s) (4) métallique(s).

21. Procédé de fabrication du substrat selon l'une des revendications 1 à 18, **caractérisé en ce qu'**on dépose au moins une des couches-barrières à base de Si₃N₄, SiO₂, SiOC, SiON ou carbures par une technique de CVD plasma.

22. Procédé de fabrication du substrat selon l'une des revendications 1 à 18, **caractérisé en ce qu**'on dépose la couche-barrière (2) du premier revêtement, quand elle est en SiOC ou SiON, par pyrolyse à pression ambiante, notamment en continu sur le ruban de verre float avant découpe.

23. Utilisation d'un substrat selon l'une quelconque des revendications 1 à 18, dans laquelle le substrat est bombé ou trempé.

## Patentansprüche

1. Transparentes Substrat (1) aus Glas, dass mit einem Aufbau aus dünnen Schichten versehen ist, der mindestens eine Metallschicht (4) auf der Basis von Silber mit speziell niedrig emittierenden Eigenschaften im Infrarot und zwei Beschichtungen auf der Basis eines dielektrischen Materials, wovon sich eine Beschichtung (8) unter und die andere (9) auf der Schicht mit Eigenschaften im Infrarot befindet, sowie eine metallische Schutzschicht (5), die unmittelbar auf und in Berührung mit der Schicht mit Eigenschaften im Infrarot angeordnet ist und wahlweise außer für die Abscheidung der nächsten Schicht durch reaktive Zerstäubung in Gegenwart von Sauerstoff, um ein Oxid abzuscheiden, **dadurch gekennzeichnet, dass,** um eine Veränderung der insbesondere optischen und thermischen Eigenschaften des Aufbaus zu verhindern, wenn das Substrat einer Wärmebehandlung vom Vorspannen oder Biegen unterworfen wird,
- einerseits die zweite Beschichtung (9) auf der Basis eines dielektrischen Materials eine Barriereschicht (7) gegen die Diffusion von Sauerstoff umfasst, die aus einem der folgenden Materialien ausgewählt ist: SiO₂, SiOₓC_{y}, SiOₓN_{y}, Si₃N₄ oder AlN und Carbiden wie SiC, TiC, CrC, TaC, und eine Dicke von mindestens 10 Nanometer aufweist,
- und andererseits die erste Beschichtung auf der Basis eines dielektrischen Materials (8) mindestens eine Barriereschicht (2) gegen die Diffusion von Alkaliionen und Sauerstoff umfasst, die aus einem der folgenden Materialien ausgewählt ist: SiO₂, SiOₓN_{y}, SiOₓC_{y}, Si₃N₄, AlN und Carbiden wie CrC, SiC, TiC, TaC,
- und die erste Beschichtung auf der Basis eines dielektrischen Materials (8) weiterhin unmittelbar unter der Metallschicht (4) mit Eigenschaften im Infrarot eine Haftschicht (3) auf der Basis von Zinkoxid ZnO in direkter Berührung mit dieser Umfasst.

2. Substrat nach Anspruch 1, **dadurch gekennzeichnet, dass** die Dicke der gegen die Sauerstoffdiffusion gerichteten Barriereschicht (7) der zweiten Beschichtung auf der Basis eines dielektrischen Materials (9) mindestens 20 nm beträgt.

3. Substrat (1) nach Anspruch 1 oder 2, **dadurch gekennzeichnet, dass** die gegen die Sauerstoffdiffusion gerichtete Barriereschicht (7) auf der Basis von SiO₂, SiOₓC_{y}, SiOₓN_{y}, Si₃N₄, AIN ist, wenn der Schichtaufbau vorgesehen ist, dem Substrat einen hohen Lichttransmissionsgrad und ein niedriges Emissionsvermögen zu verleihen.

4. Substrat (1) nach Anspruch 1 oder 2, **dadurch gekennzeichnet, dass** die gegen die Sauerstoffdiffusion gerichtete Barriereschicht (7) auf der Basis eines Carbids ist, wenn der Schichtaufbau vorgesehen ist, dem Substrat bei gesenktem Lichttransmissionsgrad Sonnenschutzeigenschaften zu verleihen.

5. Substrat nach einem der vorhergehenden Ansprüche, **dadurch gekennzeichnet, dass** die Dicke der Barriereschicht (2) der ersten Beschichtung auf der Basis eines dielektrischen Materials (8) mindestens 10 oder 15 nm, vorzugsweise mindestens 20 nm beträgt.

6. Substrat nach einem der vorhergehenden Ansprüche, **dadurch gekennzeichnet, dass** die Dicke der Schicht (4) mit Eigenschaften im Infrarot 7 bis 13 Nanometer, insbesondere zwischen 9 und 12 Nanometern beträgt, um ihr ein niedriges Emissionsvermögen, oder bis zu 20 bis 25 Nanometern beträgt, um ihr eher Sonnenschutzeigenschaften zu verleihen.

7. Substrat nach einem der vorhergehenden Ansprüche, **dadurch gekennzeichnet, dass** der Aufbau aus dünnen Schichten mehrere Metallschichten mit Eigenschaften im Infrarot umfasst.

8. Substrat nach Anspruch 7, **dadurch gekennzeichnet, dass** mindestens eine Barriereschicht vom Typ Si₃N₄ oder AlN auf der letzten der Schichten mit Eigenschaften im Infrarot angeordnet ist.

9. Substrat nach einem der vorhergehenden Ansprüche, **dadurch gekennzeichnet, dass** die obere Schutzschicht (5) auf der Basis eines Metalls ist, das aus Niobium Nb, Tantal Ta, Titan Ti, Chrom Cr oder Nickel Ni, oder einer Legierung aus mindestens zwei dieser Metalle, insbesondere einer Niob-Tantal-Legierung (Nb/Ta), Niob-Chrom-Legierung (Nb/Cr), Tantal-Chrom-Legierung (Ta/Cr), oder Nickel-Chrom-Legierung (Ni/Cr), ausgewählt ist.

10. Substrat nach Anspruch 9, **dadurch gekennzeichnet, dass** die Dicke der oberen Schutzschicht (5) höchstens 2 Nanometer, insbesondere 0,5 bis 1,5 Nanometer oder eine Dicke bis zu 8 bis 10 Nanometer beträgt.

11. Substrat nach einem der vorhergehenden Ansprüche, **dadurch gekennzeichnet, dass** die geometrische Gesamtdicke der zweiten Beschichtung (9) auf der Basis eines dielektrischen Materials 30 bis 60 Nanometer, insbesondere zwischen 35 und 45 Nanometern beträgt.

12. Substrat nach Anspruch 1, **dadurch gekennzeichnet, dass** die geometrische Dicke der darunter liegenden Haftschicht (3) auf der Basis von ZnO 5 bis 40 Nanometer, insbesondere zwischen 15 und 30 Nanometern beträgt.

13. Substrat nach einem der vorhergehenden Ansprüche, **dadurch gekennzeichnet, dass** die Beschichtung auf der Basis eines dielektrischen Materials (9), die sich auf der Schicht (4) mit Eigenschaften im Infrarot befindet, die Barriereschicht (7), die insbesondere auf der Basis von Siliciumnitrid oder Aluminiumnitrid ist, zusammen mit mindestens einer weiteren Schicht (6) aus dielektrischem Material vom Typ Metalloxid, insbesondere aus Zinkoxid, das nicht in der Lage ist, bei hohen Temperaturen strukturell modifiziert zu werden, umfasst.

14. Substrat nach Anspruch 13, **dadurch gekennzeichnet, dass** die weitere Schicht (6), die nicht in der Lage ist, bei hohen Temperaturen strukturell modifiziert zu werden, auf der Basis von wenigstens teilweise kristallisiertem Zinkoxid ist.

15. Substrat nach Anspruch 1, **dadurch gekennzeichnet, dass** der Aufbau folgender ist:
Glas (1)/Si₃N₄ oder AlN (2)/ZnO (3)/Ag (4)/Nb (5)/Si₃N₄ (7).

16. Substrat nach einem der Ansprüche 1 bis 14, **dadurch gekennzeichnet, dass** die zwei gegen die Sauerstoffdiffusion gerichteten Barriereschichten (2, 7) auf der Basis von Si₃N₄ sind.

17. Substrat nach einem der vorhergehenden Ansprüche, **dadurch gekennzeichnet, dass** es ein Emissionsvermögen ε von höchstens 0,07, insbesondere höchstens 0,06 und nach Einbau in eine Doppelverglasung einen Lichttransmissionsgrad, T_{L}, von mindestens 75 bis 80 % besitzt.

18. Substrat nach einem der vorhergehenden Ansprüche, **dadurch gekennzeichnet, dass** es nach einer Wärmebehandlung durch Biegen oder Vorspannen, insbesondere bei bis zu 640°C, eine Abweichung des Lichttransmissionsgrades ΔT_{L} von höchstens 2 % und eine Abweichung des Emissionsvermögens Δε von höchsten 0,01 besitzt.

19. Niedrig emittierende oder vor Sonne schützende Mehrfachverglasung, insbesondere Doppelverglasung, **dadurch gekennzeichnet, dass** in sie mindestens ein Substrat nach einem der vorhergehenden Ansprüche eingebaut ist.

20. Verbundglas, **dadurch gekennzeichnet, dass** in es mindestens ein Substrat nach einem der Ansprüche 1 bis 18 eingebaut ist, **und dass** es entweder vor Sonne schützend oder, indem für die Metallschicht/en (4) Stromzuführungen vorgesehen sind, beheizbar ist.

21. Verfahren zur Herstellung des Substrats nach einem der Ansprüche 1 bis 18, **dadurch gekennzeichnet, dass** mindestens eine der Barriereschichten auf der Basis von Si₃N₄, SiO₂, SiOC, SiON oder Carbiden durch Plasma-CVD aufgebracht wird.

22. Verfahren zur Herstellung des Substrats nach einem der Ansprüche 1 bis 18, **dadurch gekennzeichnet, dass** die Barriereschicht (2) der ersten Beschichtung, wenn sie aus SiOC oder Si-ON besteht, durch Pyrolyse bei Umgebungsdruck, insbesondere kontinuierlich auf das Floatglasband vor dem Zuschneiden aufgebracht wird.

23. Verwendung eines Substrats nach einem der Ansprüche 1 bis 18, bei welcher das Substrat gebogen, oder vorgespannt ist.

## Claims

1. Transparent substrate (1) made from glass, provided with a stack of thin films comprising at least one metallic layer (4) based on silver with properties in the infrared, in particular low emissive, and two coatings based on dielectric material situated one underneath (8) and the ether on top of (9)the layer with properties in the infrared, as well as metallic protective layer (5), placed immediately on top of and in contact with the layer with properties in the infrared and that is optional except in case of deposition of the next layer by reactive sputtering in the presence of oxygen so as to deposit an oxide, **characterised in that,** with a view to preventing any modification to the properties of the stack, in particular optical and thermal, where the substrate is subjected to a heat treatment of toughening or curving,
firstly the second coating (9), based on dielectric material, comprises a layer (7) which is a barrier to the diffusion of oxygen, chosen from amongst one of the following materials:
SiO₂, SiOₓC_{y}, SiOₓN_{y}, Si₃N₄, AlN, carbides such as SiC, TiC, CrC or TaC, of a thickness of at least 10 nanometres,
and secondly the first coating based on dielectric material (8) comprises at least one layer (2) which is a barrier to the diffusion of alkaline and oxygen ions, chosen from amongst one of the following materials: SiOₓN_{y}, SiO₂, SiOₓC_{y}, Si₃N₄, AlN, carbides such as CrC, SiC, TiC or TaC,
and the first coating based on dielectric material (8) also comprises, just below the metallic layer (4)with properties in the infrared, a wetting layer (3) based on zinc oxide ZnO in direct contact with the said metallic layer.

2. Substrate according to Claim 1, **characterised in that** the oxygen diffusion barrier layer (7) of the second coating based on dielectric material (9) has a thickness of at least 20 nm.

3. Substrate (1) according to Claims 1 or 2, **characterised in that** the oxygen diffusion barrier layer (7) is based on SiO₂, SiOₓC_{y}, SiOₓN_{y}, Si₃N₄, AlN when the stack of layers is intended to provide the said substrate with high light transmission and law emissivity properties.

4. Substrate (1) according to Claims 1 or 2, **characterised in that** the oxygen diffusion barrier layer (7) is based on carbide when the stack of layers is intended to provide the said substrate with antisolar properties with reduced light transmission.

5. Substrate according to one of the preceding claims, **characterised in that** the barrier layer (2) of the first coating based on dielectric material (8) has a thickness of at least 10 or 15 nm, and preferably at least 20 nm.

6. Substrate according to one of the preceding claims, **characterised in that** the layer (4) with properties in the infrared has a thickness of between 7 and 13 nanometres, in particular between 9 and 12 nanometres, in order to confer low-emissivity properties on it, or up to 20 to 25 nanometres in order rather to confer antisolar properties on it.

7. Substrate according to one of the preceding claims, **characterised in that** the stack of thin films is comprised of several metallic layers with properties in the infrared.

8. Substrate according to Claim 7, **characterised in that** at least one barrier layer of the Si₃N₄ or AlN type is placed on top of the last of the layers with properties in the infrared.

9. Substrate according to one of the preceding claims, **characterised in that** the top protective layer (5) is based on a metal chosen from amongst niobium Nb, tantalum Ta, titanium Ti, chromium Cr or nickel Ni or an alloy using at least two of these metals, in particular an alloy of niobium and tantalum (Nb/Ta), niobium and chromium (Nb/Cr) or tantalum and chromium (Ta/Cr) or nickel and chromium (Ni/Cr).

10. Substrate according to Claim 9, **characterised in that** the thickness of the top protective layer (5) is no more than 2 nanometres, in particular between 0.5 and 1.5 nanometres, or has a thickness of up to 8 to 10 nanometres.

11. Substrate according to one of the preceding claims, **characterised in that** the second coating (9) based on dielectric material has a total geometric thickness of between 30 and 60 nanometres, in particular between 35 and 45 nanometres.

12. Substrate according to Claim 1, **characterised in that** the underlying wetting layer based on ZnO (3) has a geometric thickness of between 5 and 40 nanometres, in particular between 15 and 30 nanometres.

13. Substrate according to one of the preceding claims, **characterised in that** the coating based on dielectric material (9), situated on top of the layer with properties in the infrared (4), comprises the barrier layer (7), in particular based on silicon nitride or aluminium nitride, associated with at least one other layer of dielectric material (6) not liable to undergo any structural change at high temperature, of the metallic oxide type.

14. Substrate according to Claim 13, **characterised in that** the said other layer (6) not liable to undergo any structural modification at high temperature is based on at least partially crystallised zinc oxide.

15. Substrate according to Claim 1, **characterised in that** the stack is as follows:
glass (1)/Si₃N₄ or AlN (2)/ZnO (3)/Ag (4)/Nb (5)/Si₃N₄ (7).

16. Substrate according to one of Claims 1 to 14, **characterised in that** the two oxygen diffusion barrier layers (2, 7) are based on Si₃N₄.

17. Substrate according to one of the preceding claims, **characterised in that** it has an emissivity ε of no more than 0.07 and in particular no more than 0.06, and, once mounted in double glazing, a light transmission TL of at least 75 to 80%.

18. Substrate according to one of the preceding claims, **characterised in that** it has a variation in light transmission ΔTL of no more than 2% and a variation in emissivity Δε of no more than 0.01 after heat treatment of bending or toughening, in particular up to 640°C.

19. Low-emissive or antisolar multiple glazing, in particular double glazing, **characterised in that** it incorporates at least one substrate according to one of the preceding claims.

20. Laminated glazing, **characterised in that** it incorporates at least one substrate according to one of Claims 1 to 18 and **in that** it is either antisolar, or heating by providing the power leads for the metallic layer or layers (4).

21. Method of manufacturing the substrate according to one of Claims 1 to 18, **characterised in that** at least one of the barrier layers based on Si₃N₄, SiO₂, SiOC, SiON or carbides is deposited by a plasma CVD technique.

22. Method of manufacturing the substrate according to one of Claims 1 to 18, **characterised in that** the barrier layer (2) of the first coating, when it is made from SiOC or SiON, is deposited by pyrolysis at ambient pressure, in particular continuously on the strip of float glass before cutting.

23. Use of a substrate according to any one of Claims 1 to 18, in which the substrate is bent or toughened.
